# FASCICULE DE BREVET EUROPEEN

(11) **EP 1 523 127 B1**
(45) Date de publication et mention de la délivrance du brevet: **29.11.2006**
(21) Numéro de dépôt: 04292326.8
(22) Date de dépôt: 29.09.2004
(51) Int. Cl.: H04L 12/10, H04L 12/413, G06F 1/26

(54) **Carte ethernet alimenté par un terminal ou un réseau local (LAN)**
Stromversorgung einer Ethernet-Karte durch ein Endgerät oder ein lokales Netzwerk (LAN)
Ethernet card power supplied by a terminal or a local area network (LAN)

(30) Priorité: 10.10.2003 FR 0311868
(43) Date de publication de la demande: 13.04.2005
(73) Titulaire: ALCATEL, 75008 Paris (FR)
(72) Inventeur: Le Creff, Michel, 95450 Vigny (FR); Gass, Raymond, 67150 Bolsenheim (FR)
(74) Mandataire: Sciaux, Edmond

(56) Documents cités:
- EP-A- 0 724 208
- US-A1- 2002 002 672
- US-B1- 6 496 103

## Description

L'invention concerne le domaine des réseaux locaux (ou LAN pour « Local Area Network »), et plus précisément le raccordement de terminaux de communication à de tels réseaux locaux, par des connexions de type Ethernet.

On entend ici par « terminal de communication » tout équipement de communication équipé d'une carte de connexion Ethernet LAN, amovible ou intégrée, permettant son raccordement au réseau LAN, via une connexion Ethernet, ainsi qu'éventuellement à un réseau de téléphonie et/ou à un réseau à protocole Internet (ou IP). Il s'agit par exemple d'un micro-ordinateur fixe ou portable (ou mobile), ou d'un assistant numérique personnel (ou PDA).

Le document **US 2002/0002672** décrit un réseau local capable de téléalimenter des terminaux à partir d'un dispositif de téléalimentation, notamment des terminaux alimentés localement, et téléalimentables en cas de défaillance de leur alimentation locale. Ce réseau permet de commander une réinitialisation de terminaux alimentés localement et téléalimentables, en utilisant comme signal de commande une coupure de la téléalimentation fournie à ces terminaux par un dispositif de téléalimentation.

Certains terminaux de communication sont équipés d'applications logicielles (ou de portions d'applications logicielles) qui leur permettent d'effectuer des tâches particulières. Par exemple, certains micro-ordinateurs disposent d'une partie au moins d'une application téléphonique (plus connue sous l'appellation anglaise de « soft phone ») qui leur permet de fonctionner comme un téléphone lorsqu'ils disposent d'un haut-parleur et d'un microphone.

Ces terminaux de téléphonie permettent notamment à leurs utilisateurs d'accéder à des services d'urgence, lorsqu'ils composent un numéro d'appel d'urgence, comme par exemple le n°112 en Europe ou le n°911 aux Etats Unis d'Amérique. Des lois en vigueur dans certains pays imposent aux terminaux de téléphonie de communiquer des données d'information permettant de les localiser géographiquement lorsqu'ils utilisent ces numéros d'appel d'urgence.

Pour permettre une telle localisation automatique, il a été proposé, notamment dans le document WO 03/071738, d'adapter les cartes Ethernet de sorte qu'elles puissent être alimentées à distance (par exemple conformément au standard IEEE 802.3af) par des dispositifs de contrôle d'alimentation implantés dans le réseau LAN. Un dispositif de contrôle d'alimentation (ou PPP pour « Power Patch Panel ») est un équipement installé, par exemple, dans un serveur ou un commutateur du réseau LAN, et comprenant des ports auxquels sont raccordées des connexions Ethernet auxquelles peuvent se raccorder des terminaux de communication. Lorsqu'un terminal de communication se raccorde au réseau LAN, via une connexion raccordée à un équipement PPP, celui-ci détecte sa signature (et donc sa classe de puissance) et attribue au terminal de communication une puissance électrique fonction notamment de sa signature.

Ce type d'alimentation électrique dit « fantôme » permet en théorie au terminal de communication de transmettre à un serveur dédié du réseau LAN des données d'information qui le représentent, comme par exemple son adresse MAC et/ou son adresse IP, de sorte que ce serveur dédié, ou tout autre équipement de réseau auquel il est couplé directement ou indirectement, puisse déduire la localisation du terminal à partir de ces données d'information, du numéro de port de l'équipement PPP auquel le terminal est raccordé, et d'une table de correspondance.

Or, dans le cas d'un terminal de communication de type soft phone, la carte Ethernet est raccordée électriquement par son propre bus au bus interne du terminal. En d'autres termes, la carte Ethernet est référencée au même potentiel électrique (généralement le 0 volt électrique qui est aussi le 0 logique) que le bus interne du terminal de communication. Par conséquent, lorsque le terminal de communication n'est pas raccordé au secteur, ou que l'alimentation secteur ne fonctionne pas, ou encore que sa batterie est déchargée, et que dans le même temps sa carte Ethernet est raccordée au réseau LAN par une connexion Ethernet, ladite carte Ethernet ne peut pas fonctionner correctement du fait qu'elle partage un bus commun avec le terminal de communication qui impose sur le bus des potentiels proches du 0 logique. L'invention a donc pour but de remédier à cet inconvénient.

Elle propose à cet effet une carte Ethernet permettant le raccordement à un réseau local de type LAN d'un terminal de communication comprenant un premier bus interne et pouvant être alimenté électriquement par des premiers moyens d'alimentation (comme par exemple un transformateur raccordé au secteur ou une batterie rechargeable), cette carte pouvant être raccordée au réseau local via une connexion Ethernet et comprenant un second bus couplé au premier bus interne et des seconds moyens d'alimentation pouvant être alimentés électriquement à distance, en mode fantôme via la connexion Ethernet, par des moyens de contrôle d'alimentation du réseau local.

Cette carte de connexion Ethernet se caractérise par le fait qu'elle comprend des moyens de couplage, couplés au second bus, et des moyens de contrôle raccordés logiquement aux premiers et seconds moyens d'alimentation et chargés, en cas de détection de présence d'une source d'énergie distante et d'absence d'une source d'énergie locale, d'ordonner aux moyens de couplage de découpler électriquement (c'est à dire isoler) la carte du premier bus interne, afin de permettre le fonctionnement de la carte indépendamment du terminal.

Par exemple, les moyens de couplage sont réalisés sous la forme de moyens de commutation capables de se placer, sur ordre des moyens de contrôle, soit dans un premier état, dans lequel ils interrompent le raccordement électrique du second bus au premier bus interne, soit dans un second état, dans lequel ils raccordent électriquement le second bus au premier bus interne.

Selon une autre caractéristique de l'invention, la carte peut comprendre des moyens de transfert couplés logiquement au second bus et chargés, d'une part, de stocker des données d'information représentatives d'un identifiant d'un utilisateur du terminal et/ou d'au moins un identifiant du terminal, et d'autre part, lorsque les moyens de contrôle ont détecté que la carte est alimentée à distance par ses seconds moyens d'alimentation et qu'une procédure de localisation a été déclenchée, de transmettre certaines au moins des données d'information stockées à un serveur dédié du réseau local, en vue d'une détermination de la localisation du terminal en fonction du numéro du port des moyens de contrôle d'alimentation, auquel est raccordé le terminal, et de données complémentaires stockées dans une mémoire.

Par exemple, les moyens de transfert sont chargés de déclencher la procédure de localisation lorsque la carte est alimentée à distance (en mode fantôme) via la connexion et ses seconds moyens d'alimentation.

Préférentiellement, les moyens de transfert comprennent une mémoire alimentée en données d'information par une application téléphonique implantée au moins en partie dans le terminal de communication et couplée au premier bus interne.

Par ailleurs, la carte de connexion Ethernet peut également comprendre des moyens de couplage d'alimentation chargés, lorsqu'elle est raccordée électriquement à la connexion Ethernet et en cas de détection par les moyens de contrôle d'une absence d'alimentation électrique du terminal dans lequel elle est implantée, d'autoriser le couplage électrique des seconds moyens d'alimentation aux premiers moyens d'alimentation afin que ces derniers puissent être alimentés électriquement.

Dans ce cas, les moyens de couplage d'alimentation peuvent être chargés de déterminer la répartition, entre la carte et le terminal, de la puissance électrique mise à la disposition du terminal via la connexion. Les seconds moyens d'alimentation sont alors agencés de manière à transférer vers les premiers moyens d'alimentation, lorsque cela s'impose, une partie au moins de la puissance électrique mise à disposition.

Le bus interne du terminal de communication peut être couplé à une application téléphonique (au moins en partie implantée dans ledit terminal), et le réseau local peut être raccordé à un serveur dédié associé à un identifiant téléphonique. Dans ce cas, les moyens de couplage d'alimentation peuvent être agencés de manière à permettre au terminal d'utiliser une partie de la puissance mise à disposition via la connexion Ethernet pour que son application téléphonique puisse établir une liaison téléphonique, via la carte Ethernet, avec le serveur dédié.

L'invention est particulièrement bien adaptée, bien que de façon non exclusive, aux cartes de connexion de type PCMCIA et PCI.

D'autres caractéristiques et avantages de l'invention apparaîtront à l'examen de la description détaillée ci-après, et des dessins annexés, sur lesquels :
- la figure 1 illustre de façon schématique un exemple d'installation de communications comportant un réseau local de type LAN couplé à un réseau de téléphonie et un réseau de données, et
- la figure 2 illustre de façon schématique un exemple de réalisation d'une carte de connexion selon l'invention, implantée dans un micro-ordinateur et raccordée à une connexion de type Ethernet.

Les dessins annexés pourront non seulement servir à compléter l'invention, mais aussi contribuer à sa définition, le cas échéant.

L'invention a pour objet de permettre le fonctionnement au moins partiel d'une carte Ethernet, couplée à un terminal de communication et raccordée à un réseau local de communications, notamment en l'absence d'alimentation électrique principale dudit terminal de communication.

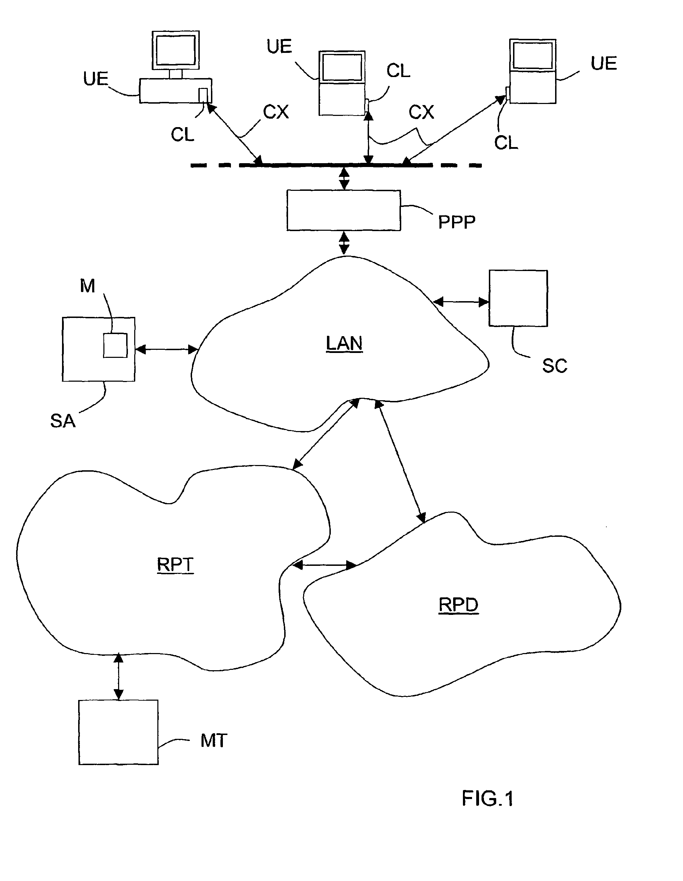

On se réfère tout d'abord à la **figure 1** pour décrire une installation de communications dans laquelle peut être utilisée l'invention.

L'installation de communications illustrée, à titre d'exemple, comporte un réseau local de communications LAN, appartenant par exemple à au moins une d'entreprise, un réseau privé et/ou public de données RPD et un réseau privé et/ou public de téléphonie RPT, pouvant appartenir à un opérateur de téléphonie, éventuellement mobile.

Le réseau local LAN est ici de type « Local Area Network ». Bien que cela ne soit pas représenté, il est raccordé au réseau de téléphonie RPT et au réseau de données RPD par l'intermédiaire d'équipements de réseau tels que des serveurs d'accès comprenant généralement des pare-feux (ou « firewalls »).

Par ailleurs, le réseau de téléphonie RPT est par exemple de type commuté (ou RTC pour « Réseau Téléphonique Commuté », ou encore PSTN pour « Public Switched Telephony Network »), mais il pourrait s'agir d'un réseau public de type PLMN (pour « Public Land Mobile Network »), comme par exemple les réseaux GSM, GSM/GPRS et UMTS. En outre, le réseau de données RPD est par exemple un réseau à protocole Internet (IP).

Bien entendu, l'invention n'est pas limitée à ces seuls types de réseaux, ni au nombre de réseaux choisi. On pourrait ainsi faire coexister un ou plusieurs réseaux locaux avec un ou plusieurs réseaux de téléphonie RPT et/ou avec un ou plusieurs réseaux de données RPD.

Le réseau local LAN dispose d'au moins une ligne de communication Ethernet LCE à laquelle sont reliées des connexions CX dont l'une des extrémités est munie d'un connecteur CNE, par exemple de type RJ45, qui permet le raccordement d'un terminal de communication UE via une carte de connexion Ethernet LAN CL. Ces connecteurs CNE sont par exemple des prises murales ou des prises logées dans des bornes de communication.

Comme indiqué dans la partie d'introduction, on entend ici par « terminal de communication » un équipement de communication équipé d'une carte de connexion Ethernet LAN CL, amovible ou intégrée, et pouvant être alimentée à distance, par exemple conformément au standard IEEE 802.3af et à ses futures variantes et extensions. Il s'agit par exemple d'un micro-ordinateur fixe ou portable, ou d'un assistant numérique personnel (ou PDA).

On considère dans ce qui suit que les terminaux de communication UE sont des micro-ordinateurs.

Chaque micro-ordinateur UE dispose d'un module d'alimentation principale (ou premiers moyens d'alimentation) MAP, pouvant être alimenté en courant par le secteur et/ou par une batterie rechargeable.

Ce module d'alimentation principale MAP permet à un micro-ordinateur UE de faire fonctionner certaines de ses applications logicielles, lorsqu'il est alimenté. On entend ici par « application logicielle » un programme informatique permettant à un micro-ordinateur UE d'effectuer une ou plusieurs tâches particulières en utilisant certaines de ses ressources et certains de ses équipements internes et/ou externes. Par exemple, une application téléphonique (ou « soft phone ») permet à un micro-ordinateur UE de fonctionner comme un téléphone, éventuellement de type IP, lorsqu'il dispose d'un haut-parleur et d'un microphone.

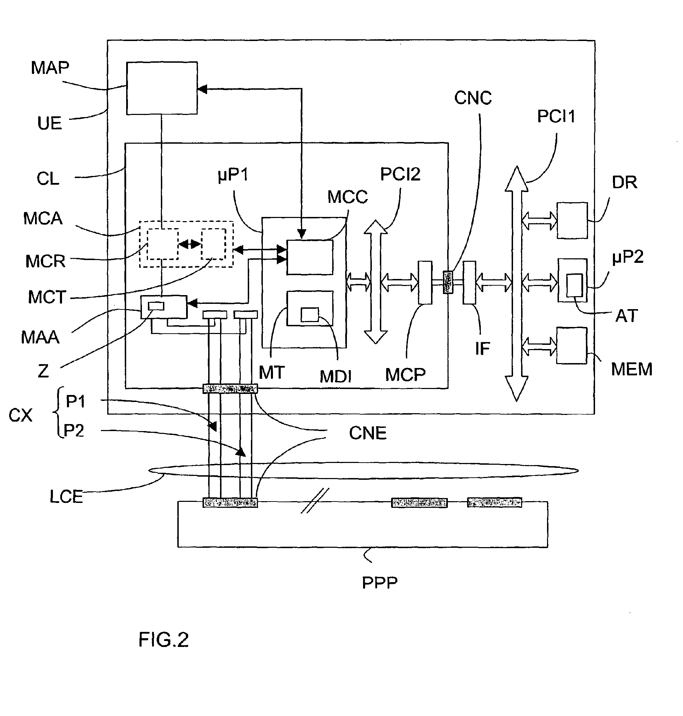

Dans ce qui suit, on considère à titre d'exemple illustratif que les micro-ordinateurs UE sont équipés d'une application téléphonique AT. Par conséquent, la carte de connexion CL, qui est implantée ou hébergée dans un micro-ordinateur UE, est ici adaptée à la téléphonie. Elle est par exemple de type PCl lorsque le micro-ordinateur est fixe ou de type PCMCIA lorsque le micro-ordinateur est portable. Ces cartes PCMCIA et PCI étant bien connues de l'homme de l'art, elles ne seront pas décrites en détail. Il est simplement rappelé, comme illustré schématiquement sur la **figure 2**, qu'une carte PCMCIA ou PCI CL comporte un bus PCl2 qui est raccordé au bus interne PCl1, du micro-ordinateur UE dans lequel elle est implantée, par l'intermédiaire d'un connecteur PCMCIA (ou PCI) CNC et d'une interface IF composée d'équipements tels que des pilotes (ou « drivers »), par exemple d'émission/réception, assurant la mise en relation des deux bus PCl1 et PCl2. Le bus PCl2 de la carte CL est donc couplé à l'application téléphonique AT via le bus interne PCl1, afin de permettre notamment l'établissement de liaisons téléphoniques avec le réseau de téléphonie RPT et/ou le réseau de données RPD.

Classiquement, le bus PCl1 est couplé à des drivers DR, à au moins un microprocesseur µP2, dans lequel se trouve préférentiellement implantée l'application téléphonique AT, et à au moins une mémoire MEM.

Il est important de noter qu'une application peut être en partie seulement implantée dans un micro-ordinateur UE, l'autre partie étant alors implantée dans un ou plusieurs serveurs du réseau LAN.

Selon l'invention, les micro-ordinateurs UE sont raccordés au réseau LAN par l'intermédiaire d'équipements de contrôle d'alimentation, ou équipements PPP (pour « Power Patch Panel »). Plus précisément, chaque équipement PPP est raccordé à la ligne de communication Ethernet LCE, à laquelle sont également raccordées des connexions Ethernet CX, par l'intermédiaire de connecteurs CNE, par exemple de type RJ45, de manière à contrôler l'alimentation des connexions Ethernet CX en mode fantôme.

Un équipement PPP est par exemple installé dans un serveur ou un commutateur du réseau LAN et dispose de ports auxquels sont raccordées des connexions Ethernet CX.

Classiquement, chaque connexion Ethernet CX dispose de plusieurs paires de câbles électriques, généralement huit, deux paires étant en pratique utilisées. La première paire utilisée P1 est généralement placée au potentiel 0 V, tandis que la seconde paire utilisée P2 est généralement placée au potentiel - 48 V. Chaque paire est reliée à chacune de ses extrémités à un enroulement de transformateur à point milieu. Dans l'équipement PPP le point milieu de la paire P1 est par exemple relié au potentiel 0 V et le point milieu de la paire P2 est relié au potentiel - 48 V, alors que dans la carte CL chaque point milieu est relié à un même pont de diode. Cet agencement constitue ce que l'homme de l'art appelle classiquement une alimentation en « mode fantôme ».

En parallèle sur le pont de diode, en amont ou en aval de celui-ci, est connecté un élément Z d'impédance prédéterminée, représentatif de la classe de puissance absorbée sur la liaison Ethernet LCE par la carte CL. Cet élément, qui est par exemple une résistance, constitue la « signature » de la carte Ethernet CL. Le pont de diode et l'élément d'impédance Z sont ici implantés dans un module d'alimentation auxiliaire MAA.

Lorsqu'un micro-ordinateur UE se raccorde au réseau LAN, via une connexion Ethernet CX raccordée à un port d'un équipement PPP, celui-ci peut immédiatement détecter sa présence. En fait, l'équipement PPP détecte la signature du micro-ordinateur UE, c'est-à-dire la valeur de son impédance et en déduit sa classe de puissance. L'équipement PPP dispose généralement d'une puissance électrique totale qu'il peut répartir entre les différents micro-ordinateurs UE raccordés aux connexions Ethernet CX qu'il contrôle, en fonction des besoins du moment et de leurs classes de puissance respectives.

Une fois qu'il a déterminé la puissance électrique (ou alimentation) qu'il peut mettre à la disposition d'un micro-ordinateur UE, l'équipement PPP lui fournit la puissance électrique via la ligne Ethernet LCE et sa connexion Ethernet CX. Le micro-ordinateur UE peut alors en disposer au niveau du module d'alimentation auxiliaire MAA de sa carte CL.

Ce type d'alimentation électrique en mode fantôme étant bien connu de l'homme de l'art, il ne sera pas plus détaillé.

Il est important de noter que la détermination de la puissance électrique par l'équipement PPP peut être supervisée par un serveur de contrôle SC du réseau LAN.

L'invention propose d'utiliser cette alimentation auxiliaire, mise à la disposition du micro-ordinateur UE, et plus précisément de sa carte CL, pour faire fonctionner ladite carte CL, ainsi qu'éventuellement une application embarquée (ici l'application téléphonique AT), y compris en l'absence d'alimentation principale du micro-ordinateur DE.

Pour ce faire, la carte Ethernet CL comprend tout d'abord un module de couplage MCP raccordé physiquement (et donc électriquement) au bus PCl2 ainsi qu'au connecteur PCMCIA (ou PCI) CNC. Ce module de couplage MCP est préférentiellement réalisé sous la forme d'un commutateur (ou interrupteur) multipôles pouvant prendre sur ordre deux états différents : un premier état, dit « non-passant », dans lequel il interrompt le raccordement (ou couplage électrique) du bus PCl2 au bus interne PCl1 du micro-ordinateur UE, et un second état, dit « passant », dans lequel il raccorde (ou couple électriquement) le (second) bus PCl2 au (premier) bus interne PCl1 du micro-ordinateur UE.

La carte Ethernet CL comprend également un module de contrôle MCC par exemple intégré dans un microcontrôleur et raccordé logiquement au module d'alimentation principale MAP et au module d'alimentation auxiliaire MAA afin de détecter leur états d'alimentation respectifs. Ce module de contrôle MCC est chargé, lorsqu'il détecte d'une part que la carte CL est alimentée à distance par son module d'alimentation auxiliaire MAA, et d'autre part que le micro-ordinateur UE n'est pas alimenté par son module d'alimentation principale MAP, d'ordonner au module de couplage MCP de se placer dans son premier état non-passant afin de découpler électriquement (ou isoler) le bus PCl2 du bus interne PCl1.

Le bus PCl2 de la carte Ethernet CL n'étant plus au potentiel du bus interne PCl1 du micro-ordinateur UE, il peut donc être placé au potentiel auquel est placé le module d'alimentation auxiliaire MAA du fait de son alimentation par l'équipement PPP via la connexion CX. Par conséquent, la carte Ethernet CL peut fonctionner indépendamment du micro-ordinateur UE. Cela peut notamment lui permettre, comme on le verra plus loin, de transmettre des données d'information destinées à permettre sa localisation, lorsque le micro-ordinateur UE dans lequel elle est implantée n'est pas alimenté.

Bien entendu, lorsque le module de contrôle MCC détecte que le micro-ordinateur UE est alimenté par son module d'alimentation principale MAP, il ordonne au module de couplage MCP de se placer dans son second état passant afin de coupler électriquement (ou raccorder) le bus PCl2 au bus interne PCI1.

Pour permettre sa localisation, la carte Ethernet CL comporte par exemple un module de transfert MT couplé logiquement au bus PCl2 ainsi qu'au module de contrôle MCC. Ce module de transfert MT est chargé, chaque fois que le module de contrôle MCC détecte que le module d'alimentation auxiliaire MAA est alimenté par l'équipement PPP, en mode fantôme, de déclencher une procédure de localisation. Cette procédure de localisation consiste tout d'abord à transmettre à un serveur dédié SA du réseau LAN, via la connexion Ethernet CX, des données d'information représentatives d'un identifiant de l'utilisateur du micro-ordinateur UE et/ou d'au moins un identifiant dudit micro-ordinateur UE.

Les modules de transfert MT et de contrôle MCC effectuent des fonctions logiques qui peuvent être incluses dans un ou plusieurs composants électroniques, tels qu'un microprocesseur (ou microcontrôleur) µC1 et la ou les mémoires associées.

Les données d'information, destinées au serveur dédié SA, sont préférentiellement stockées dans une mémoire MDI du module de transfert MT, qui est mise à jour par l'application téléphonique AT soit régulièrement, soit chaque fois que le micro-ordinateur UE est mis en fonctionnement ou éteint. Il s'agit par exemple du mot de passe de l'utilisateur (ou « user-login ») et/ou de l'adresse MAC du micro-ordinateur UE et/ou de son adresse IP. Les données d'information sont préférentiellement communiquées à l'application téléphonique AT par l'utilisateur du micro-ordinateur UE.

Le serveur dédié SA est préférentiellement agencé de manière à localiser lui-même les micro-ordinateurs UE raccordés au réseau LAN et à communiquer les localisations à un terminal de service TS qui est par exemple raccordé au réseau de téléphonie RPT, comme illustré, ou bien au réseau de données RPD.

La localisation s'effectue à partir des données d'information reçues du micro-ordinateur UE, du numéro du port de l'équipement PPP auquel est raccordée la connexion Ethernet CX utilisée par le micro-ordinateur UE, et de données (complémentaires) stockées dans une mémoire M. Ces données complémentaires sont par exemple agencées sous la forme d'une table établissant la correspondance entre des numéros de port et des localisations géographiques (ou des données de localisation représentatives de lieux ou de zones particulières). Cette table peut également comporter, en correspondance des données complémentaires, des identifiants téléphoniques de terminaux de service TS associés à des services différents. Par conséquent, une fois que le serveur dédié SA a déterminé la localisation géographique du micro-ordinateur UE appelant, il peut déterminer l'identifiant téléphonique du terminal de service TS auquel il doit transmettre la localisation de la carte Ethernet CL et/ou l'identifiant téléphonique de cette carte et/ou l'identifiant de son utilisateur.

A réception de ces informations, un terminal de service TS peut alors éventuellement tenter d'établir une liaison avec le micro-ordinateur UE dans lequel est implantée la carte Ethernet localisée CL.

Lorsque la carte Ethernet CL a été localisée et que son micro-ordinateur UE n'est pas alimenté par son module d'alimentation principale MAP, elle peut être agencée de manière à transmettre au serveur dédié SA un message signalant que l'utilisateur du micro-ordinateur UE ne peut pas être joint. Il ne peut pas, en effet, faire fonctionner son soft phone. Ce message peut être accompagné d'une instruction de renvoi d'appel vers un numéro de téléphone choisi ou vers un service de messagerie.

On peut cependant, grâce à l'invention, permettre au terminal de communication UE de faire fonctionner certaines de ses applications embarquées, et notamment son application téléphonique soft phone AT, lorsqu'il n'est pas alimenté par son module d'alimentation principale MAP.

Il est important de noter que le type de fonctionnement qui va être décrit ci-après ne peut se faire qu'à condition que le terminal de communication UE ne requière qu'une faible puissance pour fonctionner (comme par exemple dans le cas d'un PDA), ou qu'il soit capable de fonctionner en mode basse consommation, par exemple pour permettre l'utilisation d'un nombre restreint d'application.

Comme cela est matérialisé en pointillés sur la figure 2, la carte Ethernet CL peut comporter un module de couplage d'alimentation MCA raccordé à son module d'alimentation auxiliaire MAA, au module d'alimentation principale MAP du terminal UE, ainsi qu'au module de contrôle MCC. Ce module de couplage d'alimentation MCA est chargé, lorsqu'il en reçoit l'ordre du module de contrôle MCC, de coupler physiquement le module d'alimentation auxiliaire MAA au module d'alimentation principale MAP afin qu'il puisse être alimenté.

Préférentiellement, le module de couplage d'alimentation MCA détermine comment la puissance électrique disponible au niveau du module d'alimentation auxiliaire MAA doit être répartie entre la carte CL et le micro-ordinateur UE. Ainsi, la carte CL et le micro-ordinateur UE peuvent être alimentés électriquement à distance (en mode fantôme) via la connexion Ethernet CX à laquelle ledit micro-ordinateur UE est momentanément raccordé.

Dans le mode de réalisation illustré sur la figure 2, le module de couplage MC comporte, d'une part, un module de commutation et de répartition MCR raccordé au module d'alimentation principale MAP et au module d'alimentation auxiliaire MAA, et d'autre part, un module de calcul MCT chargé de calculer la répartition de puissance et de délivrer des ordres de répartition au module de commutation et de répartition MCR.

Lorsque le module de commutation et de répartition MCR reçoit ces ordres de répartition, il détermine la configuration qui lui correspond, puis il se configure afin de transférer tout ou partie de la puissance électrique, disponible au niveau du module d'alimentation auxiliaire MAA, vers le module d'alimentation principale MAP. Le micro-ordinateur UE peut alors utiliser cette puissance pour faire fonctionner une application embarquée, comme par exemple l'application téléphonique (soft phone) AT.

Grâce à l'invention, il est donc possible de faire fonctionner l'application téléphonique AT d'un terminal de communication UE alors même qu'il n'est pas alimenté par ses moyens d'alimentation principale (secteur ou batterie), mais bien entendu sous réserve que ce micro-ordinateur UE soit raccordé au réseau LAN par une connexion Ethernet CX.

Cela est particulièrement avantageux, notamment dans le cas de l'utilisation de numéros d'appel d'urgence, comme par exemple le n°112 en Europe ou le n°911 aux Etats Unis d'Amérique. En effet, on peut envisager des situations dans lesquelles un utilisateur vient de raccorder son micro-ordinateur UE à une connexion Ethernet CX du réseau LAN et souhaite composer un numéro d'appel d'urgence, mais n'a pas pu le raccorder au secteur ou que la batterie est déchargée, ou bien que l'alimentation secteur ne fonctionne pas.

Dans ce cas, le raccordement du micro-ordinateur UE à la connexion Ethernet CX est détecté par l'équipement PPP qui met à sa disposition une certaine puissance électrique qui va pouvoir être transférée, au moins en partie, au niveau du module d'alimentation principale MAP, via le module d'alimentation auxiliaire MAA. Cette puissance disponible au niveau du module d'alimentation principale MAP peut alors être utilisée par le micro-ordinateur UE pour faire fonctionner l'application téléphonique AT, c'est-à-dire ici pour permettre l'établissement d'une liaison téléphonique avec un serveur dédié SA du réseau LAN. Dans le sens inverse, cela peut également permettre à un terminal de service TS, ayant reçu du serveur dédié SA la localisation d'une carte Ethernet CL, d'établir une communication téléphonique avec le terminal de communication UE, alors que celui-ci n'est pas alimenté par son module d'alimentation principale MAP.

Il est important de noter que la carte Ethernet CL décrite ci-avant comporte toutes ses fonctionnalités habituelles permettant notamment à des applications embarquées du terminal de communication UE, dans lequel elle est implantée, de fonctionner lorsque le module d'alimentation principale MAP est alimenté.

Par ailleurs, lorsque le module de contrôle MCC détecte que le terminal de communication UE est alimenté par son module d'alimentation principale MAP, et que le module de couplage MCP est placé dans son second état passant, il peut ordonner la transmission au serveur dédié SA d'un message signalant que l'utilisateur est de nouveau joignable et/ou requérant l'annulation d'un renvoi d'appel, par exemple.

Le module de contrôle MCC, le module de couplage d'alimentation MCA, et notamment son module de calcul MCT, et le module de transfert MT, peuvent être réalisés sous la forme de circuits électroniques, de modules logiciels (ou informatiques), ou d'une combinaison de circuits et de logiciels.

L'invention ne se limite pas aux modes de réalisation de carte de connexion Ethernet et de terminal de communication décrits ci-avant, seulement à titre d'exemple, mais elle englobe toutes les variantes que pourra envisager l'homme de l'art dans le cadre des revendications ci-après.

Ainsi, dans ce qui précède il a été question d'un terminal de communication muni d'un haut-parleur et d'un microphone lui permettant de fonctionner comme un téléphone grâce à une application logicielle embarquée de type soft phone. Mais, on peut envisager de connecter directement ou indirectement à la carte Ethernet au moins des transducteurs électroacoustiques, faisant office de microphone et d'écouteur (ou haut-parleur), et d'intégrer dans la carte Ethernet, par exemple dans son processeur, l'application logicielle téléphonique. On peut également envisager de raccorder à la carte Ethernet, par une liaison filaire ou sans fil (ou« wireless »), un équipement auxiliaire comportant au moins un microphone, un écouteur, un clavier téléphonique, des circuits électroniques (destinés à coopérer avec le microphone, l'écouteur et le clavier) et un processeur associé aux circuits électroniques et permettant les échanges avec la carte Ethernet. Un tel équipement peut être par exemple ce que l'homme de l'art appelle un téléphone « passif » (ou « dumb téléphone » en anglais).

## Revendications

1. Carte (CL) de connexion Ethernet à un réseau local (LAN), pour un terminal de communication (UE), ce terminal comprenant un premier bus interne (PCl1) et des premiers moyens d'alimentation (MAP) propres à alimenter ce terminal à partir d'une source d'énergie locale ; ladite carte (CL) comportant :
- un second bus interne (PCl2),
- des moyens de couplage (MCP), pour coupler le second bus interne (PCl2) au premier bus interne (PCl1),
- et des seconds moyens d'alimentation (MAA) propres à alimenter cette carte à partir d'une source d'énergie distante (PPP) située dans ledit réseau local (LAN) ;
**caractérisée en ce qu'**elle comprend en outre des moyens (MCC) de contrôle des moyens de couplage (MCP), ces moyens (MCC) de contrôle étant raccordés logiquement aux premiers (MAP) et seconds (MAA) moyens d'alimentation, et agencés pour ordonner auxdits moyens de couplage de découpler électriquement le second bus interne (PCl2) du premier bus interne (PCI1), de manière à permettre un fonctionnement de la carte indépendamment dudit terminal (UE) en cas de détection de présence d'une source d'énergie distante et d'une absence de source d'énergie locale.

2. Carte selon la revendication 1, **caractérisée en ce que** lesdits moyens de couplage (MCP) sont des moyens de commutation propres à se placer, sur ordre desdits moyens de contrôle (MCC), soit dans un premier état, dans lequel ils interrompent le couplage électrique dudit second bus (PCl2) audit premier bus interne (PCl1), soit dans un second état, dans lequel ils raccordent électriquement ledit second bus interne (PCl2) audit premier bus interne (PCl1).

3. Carte selon la revendication 1, **caractérisée en ce que** qu'elle comprend des moyens de transfert (MT) couplés logiquement audit second bus interne (PCl2), et propres à stocker des données d'information représentatives d'un identifiant d'un utilisateur dudit terminal (UE) et/ou d'un identifiant dudit terminal (UE), et agencés pour transmettre certaines au moins desdites données d'information à un serveur dédié (SA) dudit réseau local (LAN) en vue d'une détermination de la localisation dudit terminal (UE) en fonction au moins desdites données d'information reçues et de données complémentaires stockées dans une mémoire (M), dans le cas d'une détection de la présence d'une source d'énergie distante (PPP) et de déclenchement d'une procédure de localisation.

4. Carte selon la revendication 3, **caractérisée en ce que** lesdits moyens de transfert (MT) sont agencés pour déclencher ladite procédure de localisation dans le cas d'une détection de la présence d'une source d'énergie distante (PPP) par lesdits moyens de contrôle (MCC) via ladite connexion (CX) et lesdits seconds moyens d'alimentation (MAA).

5. Carte selon la revendication 3, **caractérisée en ce que** lesdits moyens de transfert (MT) comprennent une mémoire (MDI) propre à être alimentée en données d'information par une application téléphonique (AT) au moins en partie implantée dans ledit terminal (UE) et couplée audit premier bus interne (PCl1).

6. Carte selon la revendication 1, **caractérisée en ce qu'**elle comprend des moyens de couplage d'alimentation (MCA) raccordés physiquement auxdits premiers (MAP) et seconds (MAA) moyens d'alimentation, et agencés pour alimenter électriquement le terminal (UE) à partir de la source d'énergie distante (PPP), en cas de raccordement électrique de ladite carte (CL) à ladite connexion (CX) et de détection d'une absence de source d'énergie locale par lesdits premiers moyens d'alimentation (MAP).

7. Carte selon la revendication 6, **caractérisée en ce que** lesdits moyens de couplage d'alimentation (MC) sont agencés pour déterminer une répartition de la puissance électrique, fournie par les moyens de contrôle d'alimentation (PPP) via ladite connexion (CX), entre ladite carte (CL) et ledit terminal (UE),
et **en ce que** lesdits seconds moyens d'alimentation (MAA) sont agencés pour transférer vers lesdits premiers moyens d'alimentation (MAP) une partie au moins de ladite puissance électrique en fonction de ladite répartition déterminée.

8. Carte selon la revendication 7, pour un terminal de communication (UE) comprenant un premier bus interne (PCI1) couplé à une application téléphonique (AT) au moins en partie implantée dans ledit terminal (UE), **caractérisée en ce que** lesdits moyens de couplage d'alimentation (MCA) sont agencés pour permettre au terminal (UE) d'utiliser une partie de la puissance mise à disposition via ladite connexion Ethernet (CX) pour que ladite application téléphonique (AT) puisse établir une liaison téléphonique, via la carte Ethernet (CL), avec un serveur dédié (SA) raccordé au réseau local (LAN).

9. Carte selon la revendication 1, **caractérisée en ce qu'**elle est agencée sous la forme d'une carte de type PCMCIA à alimentation à distance.

10. Carte selon la revendication 1, **caractérisée en ce qu'**elle est agencée sous la forme d'une carte de type PCI à alimentation à distance.

## Claims

1. An Ethernet card (CL) for connection to a local network (LAN), for a communication terminal (UE), where this terminal includes a first internal bus (PCI1) and first power means (MAP) capable of powering this terminal from a local power source, where the said card (CL) includes:
- a second internal bus (PCI2),
- coupling means (MCP), to couple the second internal bus (PCI2) to the first internal bus (PCI1), and
- second power means (MAA) capable of powering this card from a remote power source (PPP) located in the said local network (LAN);
**characterized by** the fact that it also includes control means (MCC) for the coupling means (MCP), where these control means (MCC) are connected logically to the first (MAP) and second (MAA) power means, and arranged to command the said coupling means to electrically decouple the second internal bus (PCI2) from the first internal bus (PCI1), so as to allow operation of the card independently of the said terminal (UE) in the event of detection of the presence of a remote power source and the absence of a local power source.

2. A card according to claim 1, **characterized by** the fact that the said coupling means (MCP) are switching means capable of being set, at the command of the said control means (MCC), either to a first state in which they interrupt the electrical coupling of the said second bus (PCI2) to the said first internal bus (PCI1), or to a second state in which they electrically connect the said second internal bus (PCI2) to the said first internal bus (PCI1).

3. A card according to claim 1, **characterized by** the fact that it includes transfer means (MT) coupled logically to the said second internal bus (PCI2), and able to store data representing the identifier of a user of the said terminal (UE) and/or an identifier of the said terminal (UE), and arranged to transmit at least some of the said data to a dedicated server (SA) of the said local network (LAN) with a view to determining the location of the said terminal (UE) on the basis at least of the said received data and of additional data stored in a memory (M), in the event of detecting the presence of a remote power source (PPP) and the triggering of a location procedure.

4. A card according to claim 3, **characterized by** the fact that the said transfer means (MT) are arranged to trigger the said location procedure in the event of detection of the presence of a remote power source (PPP) by the said control means (MCC) via the said connection (CX) and the said second power means (MAA).

5. A card according to claim 3, **characterized by** the fact that the said transfer means (MT) include a memory (MDI) capable of being supplied with data by a telephony application (AT) at least partially installed in the said terminal (UE) and coupled to the said first internal bus (PCI1).

6. A card according to claim 1, **characterized by** the fact that it includes power coupling means (MCA) connected physically to the said first (MAP) and second (MAA) power means, and arranged to electrically power the terminal (UE) from the remote power source (PPP), in the event of electrical connection of the said card (CL) to the said connection (CX) and detection of the absence of a local power source by the said first power means (MAP).

7. A card according to claim 6, **characterized by** the fact that the said power coupling means (MC) are arranged to determine a division of the electrical power, supplied by the power control means (PPP) via the said connection (CX), between the said card (CL) and the said terminal (UE), and in that the said second power means (MAA) are arranged to transfer to the said first power means (MAP) at least a part of the said electrical power according to the said determined division.

8. A card according to claim 7, for a communication terminal (UE) including a first internal bus (PCI1) coupled to a telephony application (AT) at least partially installed in the said terminal (UE), **characterized by** the fact that the said power coupling means (MCA) are arranged so as to allow the terminal (UE) to use part of the power made available via the said Ethernet connection (CX) so that the said telephony application (AT) can establish a telephone connection, via the Ethernet card (CL), to a dedicated server (SA) connected to the local network (LAN).

9. A card according to claim 1, **characterized by** the fact that it is arranged in the form of a card of the PCMCIA type for remote powering.

10. A card according to claim 1, **characterized by** the fact that it is arranged in the form of a card of the PCI type for remote powering.

## Patentansprüche

1. Ethernet-Verbindungskarte (CL) an ein lokales Netzwerk (LAN) für ein Kommunikationsendgerät (UE), wobei dieses Endgerät einen ersten internen Bus (PCI1) und erste Stromversorgungsmittel (MAP) umfasst, die dazu geeignet sind, dieses Endgerät von einer lokalen Energiequelle aus mit Strom zu versorgen; hierbei umfasst die Karte (CL):
- einen zweiten internen Bus (PCI2),
- Kopplungsmittel (MCP), um den zweiten internen Bus (PCI2) an den ersten internen Bus (PCI1) zu koppeln;
- und zweite Stromversorgungsmittel (MAA), die dafür geeignet sind, diese Karte von einer entfernten Energiequelle (PPP) aus, die sich in dem lokalen Netzwerk (LAN) befindet, mit Strom zu versorgen;
**dadurch gekennzeichnet, dass** sie außerdem Mittel (MCC) zur Steuerung der Kopplungsmittel (MCP) umfasst, wobei diese Steuerungsmittel (MCC) logisch mit den ersten (MAP) und zweiten (MAA) Stromversorgungsmitteln verbunden sind und so angeordnet sind, dass sie den Kopplungsmitteln den Befehl erteilen, den zweiten internen Bus (PCI2) elektrisch von dem ersten internen Bus (PCI1) zu entkoppeln, sodass ein Betrieb der Karte unabhängig von dem Endgerät (UE) für den Fall ermöglicht wird, dass das Vorhandensein einer entfernten Energiequelle und das Fehlen einer lokalen Energiequelle erkannt wird.

2. Karte nach Anspruch 1, **dadurch gekennzeichnet, dass** die Kopplungsmittel (MCP) Umschaltmittel sind, die dazu geeignet sind, sich auf einen Befehl der Steuerungsmittel (MCC) hin entweder in einen ersten Zustand zu versetzen, in dem sie die elektrische Kopplung des zweiten Busses (PCI2) an den ersten internen Bus (PCI1) unterbrechen, oder in einen zweiten Zustand, in dem sie den zweiten internen Bus (PCI2) elektrisch an den ersten internen Bus (PCI1) anschließen.

3. Karte nach Anspruch 1, **dadurch gekennzeichnet, dass** sie Übertragungsmittel (MT) umfasst, die logisch mit dem zweiten internen Bus (PCI2) gekoppelt sind und die dazu geeignet sind, Informationsdaten zu speichern, die für eine Kennung eines Benutzers dieses Endgerätes (UE) und/oder eine Kennung des Endgerätes (UE) repräsentativ sind, und wobei [die Mittel] so angeordnet sind, dass sie zumindest bestimmte der Informationsdaten an einen dedizierten Server (SA) des lokalen Netzwerks (LAN) übertragen, und zwar zum Zweck einer Bestimmung der Lokalisierung dieses Endgerätes (UE) in Abhängigkeit von mindestens den empfangenen Informationsdaten und ergänzenden in einem Speicher (M) gespeicherten Daten für den Fall, dass das Vorhandensein einer entfernten Energiequelle (PPP) erkannt und ein Lokalisierungsverfahren ausgelöst wird.

4. Karte nach Anspruch 3, **dadurch gekennzeichnet, dass** die Übertragungsmittel (MT) so angeordnet sind, dass sie das Lokalisierungsverfahren für den Fall auslösen, dass das Vorhandensein einer entfernten Energiequelle (PPP) über die Verbindung (CX) und die zweiten Stromversorgungsmittel (MAA) von den Steuerungsmitteln (MCC) erkannt wird.

5. Karte nach Anspruch 3, **dadurch gekennzeichnet, dass** die Übertragungsmittel (MT) einen Speicher (MDI) umfassen, der dazu geeignet ist, mit Informationsdaten von einer Telefonanwendung gespeist zu werden, die zumindest teilweise in dem Endgerät (UE) implementiert und die mit dem ersten internen Bus (PCI1) gekoppelt ist.

6. Karte nach Anspruch 1, **dadurch gekennzeichnet, dass** sie Stromversorgungskopplungsmittel (MCA) umfasst, die physisch mit den ersten (MAP) und zweiten (MAA) Stromversorgungsmitteln gekoppelt sind und die so angeordnet sind, dass sie das Endgerät (UE) von der entfernten Energiequelle (PPP) aus für den Fall mit Strom versorgen, dass die Karte (CL) an die Verbindung (CX) angeschlossen ist und dass das Fehlen einer lokalen Energiequelle von den ersten Stromversorgungsmitteln (MAP) erkannt wird.

7. Karte nach Anspruch 6, **dadurch gekennzeichnet, dass** die Stromversorgungskopplungsmittel (MC) dafür angeordnet sind, dass sie eine Verteilung der von den Stromversorgungssteuerungsmitteln (PPP) über die Verbindung (CX) gelieferten elektrischen Leistung zwischen der Karte (CL) und dem Endgerät (UE) festlegen, und **dadurch**, dass die zweiten Stromversorgungsmittel (MAA) dafür angeordnet sind, dass sie zumindest einen Teil der elektrischen Leistung in Abhängigkeit von der festgelegten Verteilung zu den ersten Stromversorgungsmitteln (MAP) übertragen.

8. Karte nach Anspruch 7 für ein Kommunikationsendgerät (UE), umfassend einen ersten internen Bus (PCI1), der an eine Telefonanwendung (AT) gekoppelt ist, die zumindest teilweise in dem Endgerät (UE) implementiert ist, **dadurch gekennzeichnet, dass** die Stromversorgungskopplungsmittel dafür angeordnet sind, dass sie dem Endgerät (UE) ermöglichen, einen Teil der über die Ethernet-Verbindung (CX) bereitgestellten Leistung zu nutzen, damit die Telefonanwendung (AT) eine Telefonverbindung über die Ethernet-Karte (CL) zu einem an das lokale Netzwerk (LAN) angeschlossenen dedizierten Server (SA) herstellen kann.

9. Karte nach Anspruch 1, **dadurch gekennzeichnet, dass** sie in Form einer Karte des PCMCIA-Typs mit Fernspeisung angeordnet ist.

10. Karte nach Anspruch 1, **dadurch gekennzeichnet, dass** sie in Form einer Karte des PCI-Typs mit Fernspeisung angeordnet ist.
